Europäisches Patentamt

European Patent Office

Office européen des brevets

(11) Publication number: 0 216 560
A1

# EUROPEAN PATENT APPLICATION

(21) Application number: 86306939.9

(22) Date of filing: 09.09.86

(51) Int. Cl.⁴: G03G 21/00 , B32B 15/12

(30) Priority: 09.09.85 US 773996

(43) Date of publication of application:
01.04.87 Bulletin 87/14

(84) Designated Contracting States:
DE FR GB IT

(71) Applicant: MINNESOTA MINING AND
MANUFACTURING COMPANY
3M Center, P.O. Box 33427
St. Paul, Minnesota 55133-3427(US)

(72) Inventor: Warhol, Nicholas c/o Minnesota
Mining and Manuf. C
2501 Hudson Road
St. Paul Minnesota 55133-3427(US)

(74) Representative: Baillie, Iain Cameron et al
c/o Ladas & Parry Isartorplatz 5
D-8000 München 2(DE)

(54) Mounting structure for security strip.

(57) A mounting structure for a flat, narrow, metallic
strip (10) for mounting the strip on a sheet of paper
which includes a piece of paper (12) to which the
metallic strip (10) is adhered by an adhesive (14)
carried on one surface of the paper. The piece of
paper (12) is dimensioned to provide a border with
adhesive (14) that extends about the periphery of the
metallic strip (10). The structure can be stored on
Kraft paper to which adhesive does not permanently
adhere.

FIG.3

EP 0 216 560 A1

## Mounting Structure For Security Strip

### Technical Field

The invention presented herein relates to electronically detectable, flat, narrow, metallic strips and, in particular, to structures for permanently mounting such a strip on a sheet of paper without preventing use of the sheet of paper as copy paper in an office copier.

### Background Art

U.S. Patent 4,486,090 to Nicholas Warhol discloses a copy machine having an eddy current proximity detector that is positioned so that a document to be copied is scanned by the detector. If the document to be copied carries a piece of metal, such as a flat, narrow, metallic strip, the strip is detected by the detector which in turn signals the copy machine to prevent it from producing a copy of the document. Documents using such metallic strips sometimes are produced initially using an office copier or duplicator. It is preferred that the sheets of copy paper used to produce such documents have the metallic strip attached to each copy sheet prior to use of the copy paper for receiving the copy image in a copying process. This presents a problem since the metallic strips, which are cut from flat stock, have rough edges with interfere with the feeding of such strip bearing copy sheets into a copy machine. Attachment of the metallic strip of paper, therefore, presents a problem if it is to be used as copy paper for a copy machine.

### Disclosure of Invention

The problem presented in attaching a metallic strip to a sheet of paper in a manner that allows the paper to be used as copy paper in a copy machine is solved by the present invention. The present invention also provides a mounting structure for the metallic strip that avoids exposure to a person's hand of the sharp edge of the metallic strip in the event attachment of the metallic strip to a sheet of paper is done manually. The mounting structure provided by the present invention also allows the mounting structures to be stored in roll form which is convenient for use in machinery capable of automatically applying the metallic strip mounting structure to a sheet of paper.

The mounting structure provided by the invention for securing a flat, narrow, metallic strip to a sheet of paper includes the metallic strip that is secured to an adhesive present at one surface of a piece of paper whose length and width dimensions are greater than those of the metallic strip wherein the metallic strip is positioned centrally of such paper so that paper provides an adhesive covered border portion about the periphery of the metallic strip for securing the metallic strip and paper combination to a sheet of paper. The piece of paper bearing the adhesive to which the metallic strip is secured covers the metallic strip when it is secured to a sheet of paper eliminating the problem presented by the metallic strip with respect to movement of the sheet of paper through a copy machine should it be so used.

### Brief Description of the Drawings

The present invention and its embodiment will now be explained in greater detail with reference to the attached drawings wherein:

Figure 1 is a bottom plan view of a metallic strip mounting structure;

Figure 2 is a top plan view of the mounting structure of Figure 1 attached to a liner strip or carrier; and

Figure 3 is an enlarged cross-sectional view taken along the line 3-3 in Figure 2.

### Detailed Description

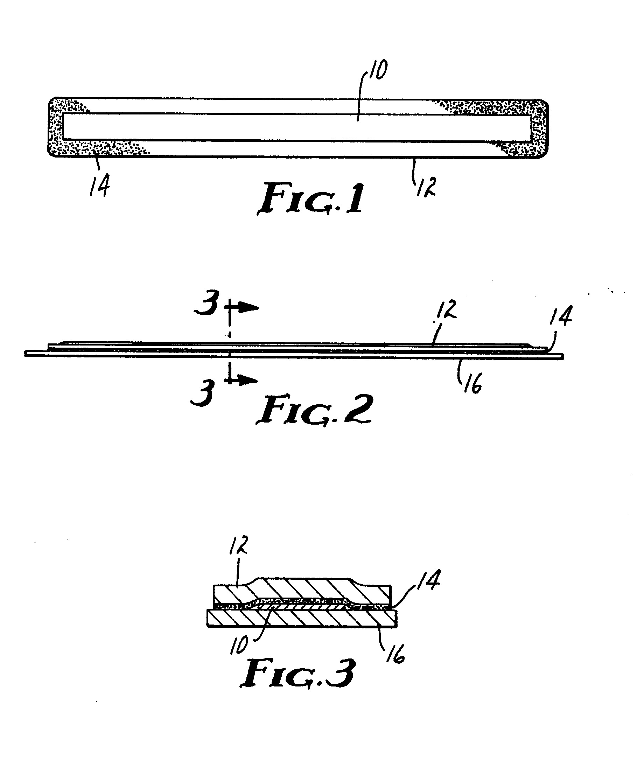

Referring to Figure 1 of the drawings, a mounting structure embodying the invention is shown which includes a flat, narrow, metallic strip 10 that is located centrally of a piece of paper 12. The length and width of the paper 12 exceeds that of the metallic strip to provide a border area around the periphery of the metallic strip by the paper 12. An adhesive 14 is carried on the entire surface of the paper 12 that receives the metallic strip 10. The adhesive can be of the type typically used on paper labels that are stored on a paper liner or carrier, such as 43 pound, semi-bleached Kraft paper, to which the adhesive does not adhere. This allows the mounting structure to be removed readily from such paper for placement on a selected surface. It is preferred that the adhesive also be one that will provide a tenacious bond to paper that is suitable for use in an office copier. Adhesives providing these characteristics are well known.

The mounting structure of Figure 1 is usable for mounting the metallic strip 10 to paper to be used as copy paper for making copies of documents that are not to be copied or may be secured to an existing document that is not to be copied by use of an office copy machine. The structure of Figure 1 is secured to any sheet of paper that is to receive a metallic strip 10 by placing the adhesive 14 side of the structure toward the sheet of paper and applying a slight pressure over the entire surface of the structure. The paper 12 used for the structure of Figure 1 can be one that readily fractures or delaminates so any effort made to remove the metallic strip 10 after it is mounted on a sheet of paper can be readily detected.

Referring to Figure 2, a side view of the structure of Figure 1 is shown wherein it is mounted on a carrier 16 which can be a long, narrow piece of paper to which the adhesive 14 on the paper 12 does not permanently adhere. Forty-three pound, semi-bleached Kraft paper is suitable for the carrier 16. A number of the structures per Figure 1 can be placed along the carrier 16 which, if desired can be attached at one end to a mandrel and rolled up to provide a convenient form for storing a number of the Figure 1 structures. Such an arrangement provides a convenient form for use with machinery for automatically and permanently mounting the structures of Figure 1 on selected sheets of paper. Figure 3 is an enlarged sectional view taken along the line 3-3 of the structure of Figure 2 showing the structure of Figure 1 carried by the carrier 16. As can be seen, the paper 12 protects a copy machine from the rough edge presented by the metallic strip 10 which allows copy paper to which the structure of Figure 1 may be attached to pass unimpeded along the copy paper path of a copy machine.

The metal used for the metallic strip 10 can be one which will produce eddy currents when it is placed in a high frequency electromagnetic field allowing it to be detected by an eddy current detector. If such is the case, the metallic strip 10, when mounted on a document that is not to be copied, can be detected by an eddy current detector provided on an office copier of the type described in U.S. patent 4,486,000 supra preventing the copier from making a copy of a document carrying the metallic strip 10.

An example of a mounting structure per Figure 1 that can be made includes the use of a white paper 12 having a nominal thickness of .0865 mm, a metallic strip 10 of alloy 2826MB, purchased from the Allied Corporation, Morristown, New Jersey 07960, having a nominal thickness of about .0254 mm with the adhesive 14 carried by the paper 12 being a high strength transparent acrylic adhesive with a nominal thickness of about .0279 mm. A liner or carrier 16 on which the structure of Figure 1 can be stored prior to use can be made from 43 pound, semi-bleached Kraft paper having a nominal thickness of .0635 mm.

## Claims

1. A mounting structure for use in mounting a flat, narrow, metallic strip on a sheet of paper including:

a flat, narrow, metallic strip (10);

a piece of paper (12) having length and width dimensions that are greater than those of said metallic strip; and

an adhesive (14) carried on one side of said piece of paper with said narrow, metallic strip (10) held by said adhesive (14) and positioned centrally of said piece of paper whereby an adhesive covered border is provided by said piece of paper about the periphery of said metallic strip for use in securing said piece of paper with said metallic strip to a selected surface.

2. A mounting structure according to claim 1 wherein said adhesive (14) is one that provides a tenacious bond between said piece of paper (12) and copy paper usable in office copiers.

3. A mounting structure according to claim 1 including a carrier (16) having a surface to which said adhesive (14) does not permanently adhere on which said piece of paper (12) with said metallic strip (10) with said adhesive covered border contacting said surface is placed prior to use.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | IBM TECHNICAL DISCLOSURE BULLETIN, vol. 6, no. 6, November 1973, pages 1951-1952; B.R. BOGGS et al.: "Gradiometer document detector for copy security" | 1 | G 03 G  21/00<br>B 32 B  15/12 |
| | --- | | |
| A | PATENT ABSTRACTS OF JAPAN, vol. 9, no. 120 (P-358)[1843], 24th May 1985; & JP - A - 60 4964 (FUJI XEROX) 11-01-1985 | 1 | |
| | --- | | |
| A | GB-A-1 391 944  (ZELLWEGER USTER)<br>* claims 1, 3 * | 1 | |
| | --- | | |
| D,A | US-A-4 486 090  (N. WARHOL)<br>* columns 1, 2 * | 1 | TECHNICAL FIELDS SEARCHED (Int. Cl.4) |
| | ----- | | B 23 B  15/00<br>G 03 G  21/00 |

The present search report has been drawn up for all claims

| Place of search | Date of completion of the search | Examiner |
|---|---|---|
| BERLIN | 05-11-1986 | HOPPE H |